# DEMANDE DE BREVET EUROPEEN

(11) **EP 0 841 265 A1**
(43) Date de publication de la demande: **13.05.1998**
(21) Numéro de dépôt: 97402483.8
(22) Date de dépôt: 20.10.1997
(51) Int. Cl.: B65G 1/137, B65G 37/02

(54) **Installation de convoyage pour préparation d'ensemble d'objets**

(30) Priorité: 08.11.1996 FR 9613785
(71) Demandeur: Savoye Nouvelle Société Anonyme dite SAVOYE N.S.A., F-21550 Ladoix Serrigny (FR)
(72) Inventeur: de Barbuat, Charles Antoine, 21700 Nuits-Saint-Georges (FR)
(74) Mandataire: Martinet & Lapoux

(57) **Abrégé**

Une installation de convoyage de contenants comprend un convoyeur d'aller (2) et un convoyeur de retour (3) pour convoyer des contenants (8) suivant des directions opposées. Plusieurs convoyeurs de chargement (5ₙ) sur lesquels des contenants reçoivent des objets déterminés sont disposés le long de l'un (3) des convoyeurs d'aller et de retour. Afin de raccourcir le cheminement des contenants et éviter des obstructions sur les convoyeurs d'aller et de retour en amont de convoyeurs de chargement saturés, plusieurs moyens (23ₙ) localisés entre les convoyeurs de chargement peuvent transférer des contenants depuis le convoyeur d'aller (2) vers le convoyeur de retour (3) . De même, plusieurs moyens (32Sₙ) localisés entre les extrémités (5Eₙ, 5Sₙ) des convoyeurs de chargement (25ₙ) peuvent transférer des contenants depuis le convoyeur de retour (3) vers le convoyeur d'aller (2).

## Description

La présente invention concerne une installation de convoyage de contenants comprenant un convoyeur d'aller et un convoyeur de retour pour convoyer des contenants suivant des directions de convoyage opposées, plusieurs convoyeurs de chargement disposés le long de l'un des convoyeurs d'aller et de retour, et plusieurs premiers moyens pour transférer des contenants depuis ledit un des convoyeurs d'aller et de retour vers des extrémités amont des convoyeurs de chargement respectivement.

Une telle installation de convoyage constitue par exemple une gare dans un entrepôt de préparation automatisée de commandes d'objets. Un convoyeur principal distribue à plusieurs gares des contenants en fonction des objets commandés qui sont à déposer dans les contenants au niveau des convoyeurs de chargement.

Dans chaque gare, un contenant passe obligatoirement à travers un moyen pour transférer des contenants situé entre l'extrémité aval du convoyeur d'aller et l'extrémité amont du convoyeur de retour, même lorsque le seul convoyeur de chargement sur lequel le contenant doit provisoirement stationner, est situé à l'opposé, au niveau de l'extrémité aval du convoyeur de retour.

En outre, lorsque plusieurs contenants successifs doivent être dirigés vers le même convoyeur de chargement, ce dernier peut être saturé, ce qui bloque le convoyage sur ledit un des convoyeurs d'aller et de retour et empêche les contenants suivants d'être convoyés vers d'autres convoyeurs de chargement qui sont disponibles.

La présente invention vise à remédier aux inconvénients précités et plus précisément à raccourcir le cheminement de contenants vers un convoyeur de chargement donné, et à permettre l'acheminement des contenants quel que soit l'état de saturation des convoyeurs de chargement situés en amont du convoyeur de chargement donné.

A cette fin, une installation de convoyage de contenants telle que définie dans l'entrée en matière est caractérisée en ce qu'elle comprend plusieurs seconds moyens pour transférer des contenants depuis le convoyeur d'aller vers le convoyeur de retour.

De préférence, au moins l'un des seconds moyens pour transférer est localisé entre une extrémité aval et une extrémité amont respectivement de deux convoyeurs de chargement consécutifs le long dudit un des convoyeurs d'aller et de retour, ou est localisé en alignement transversal avec l'un des premiers moyens pour transférer.

Les seconds moyens pour transférer peuvent ainsi raccourcir le cheminement des contenants sur les convoyeurs d'aller et de retour afin qu'ils atteignent rapidement les convoyeurs de chargement où ils doivent recevoir des objets. Ce raccourcissement évite d'encombrer les convoyeurs d'aller et retour par des contenants qu'il n'est pas nécessaire de faire passer devant tous les convoyeurs de chargement.

Afin encore d'augmenter la fluidité des contenants sur les convoyeurs d'aller et retour, l'installation conforme à l'invention peut comprendre plusieurs troisièmes moyens respectivement localisés entre les extrémités des convoyeurs de chargement pour transférer des contenants depuis le convoyeur de retour vers le convoyeur d'aller. De préférence, les troisièmes moyens pour transférer sont localisés à proximité des extrémités aval des convoyeurs de chargement respectivement, et l'installation comprend plusieurs troisièmes moyens pour transférer localisés entre les extrémités de chaque convoyeur de chargement.

Les troisièmes moyens pour transférer permettent à des contenants d'être réinjectés sur le convoyeur d'aller, sans s'éloigner du convoyeur de chargement où les contenants doivent être chargés, et ainsi de cheminer dans la gare, en attente du dégagement du convoyeur de chargement où ils doivent être chargés. Ce cheminement "forcé" en boucle dans la gare permet à la fois de ne pas éloigner les contenants de leur convoyeur de chargement et de laisser passer d'autres contenants destinés à d'autres convoyeurs de chargement.

De manière à réduire le coût de l'installation, les seconds moyens pour transférer sont respectivement localisés périodiquement entre des groupes de convoyeurs de chargement consécutifs, et des troisièmes moyens localisés à proximité des seconds moyens pour transférer sont prévus pour transférer des contenants depuis le convoyeur de retour vers le convoyeur d'aller.

De préférence, chaque second moyen pour transférer est localisé en amont du troisième moyen pour transférer localisé à proximité de celui-ci, suivant la direction de convoyage du convoyeur d'aller.

L'installation peut comprendre des quatrièmes moyens pour transférer des contenants depuis les convoyeurs de chargement vers ledit un des convoyeurs d'aller et de retour respectivement, les quatrièmes moyens pour transférer étant de préférence localisés aux extrémités amont des convoyeurs de chargement respectivement. Il peut être également prévu au moins un cinquième moyen pour transférer localisé entre des extrémités de l'un des convoyeurs de chargement pour transférer des contenants depuis ledit un convoyeur de chargement vers ledit un des convoyeurs d'aller et de retour.

En variante, de manière à réduire le coût de l'installation, à la place d'un couple de quatrième et premier moyens pour transférer sensiblement accolés est prévu un moyen localisé à une extrémité aval de l'un de deux convoyeurs de chargement consécutifs et à une extrémité amont de l'autre des deux convoyeurs de chargement consécutifs tantôt pour transférer des contenants depuis ledit un des convoyeurs d'aller et de retour vers l'extrémité amont dudit autre des convoyeurs de chargement consécutifs, tantôt pour transférer des contenants depuis l'extrémité aval dudit un de deux convoyeurs de chargement consécutifs vers ledit un des convoyeurs d'aller et de retour.

L'installation selon l'invention peut être complétée par plusieurs convoyeurs de chargement s'étendant le long dudit autre des convoyeurs d'aller et de retour et auxquels d'autres dispositifs de transfert sont associés.

Afin de libérer de l'espace frontal dans les postes de chargement tout en conservant des facilités de contrôle des objets prélevés aux postes de chargement, les convoyeurs sont abaissés et reposent sur le sol. Chaque convoyeur de chargement est alors associé à une tablette surélevée par rapport au convoyeur de chargement, un moyen disposé en amont de la tablette pour monter un contenant depuis le convoyeur de chargement vers la tablette, et un moyen disposé en aval de la tablette pour descendre un contenant depuis la tablette vers le convoyeur de chargement. Le moyen pour monter, la tablette et le moyen pour descendre peuvent être localisés au voisinage de l'extrémité aval dudit convoyeur de chargement associé.

Le contrôle des objets à déposer dans un contenant disposé sur la tablette peut être effectué par exemple par lecture de codes-à-barres de chaque objet à déposer dans le contenant. Selon une autre variante, le contrôle des objets à déposer dans chaque contenant est complété par un contrôle pondéral grâce à un moyen, par exemple un dispositif de pesage associé à la tablette, contrôlant la charge du contenant à chaque dépôt d'un objet ou d'un lot d'objets dans le contenant.

Selon une autre réalisation de l'installation conforme à l'invention, les convoyeurs de chargement sont remplacés ou comprennent chacun par un convoyeur de chargement d'aller et un convoyeur de chargement de retour disposés sensiblement perpendiculairement audit un des convoyeurs d'aller et de retour, et un moyen pour transférer des contenants depuis une extrémité aval du convoyeur de chargement d'aller vers une extrémité amont du convoyeur de chargement de retour.

Dans cette réalisation, le convoyeur de chargement d'aller et le convoyeur de chargement de retour peuvent être également associés à une tablette surélevée par rapport aux convoyeurs de chargement d'aller et de retour, un moyen disposé en amont de la tablette pour monter un contenant depuis l'extrémité aval du convoyeur de chargement d'aller vers la tablette, et un moyen disposé en aval de la tablette pour descendre un contenant depuis la tablette vers l'extrémité amont du convoyeur de chargement de retour. La tablette dans cette réalisation peut être également associée à un moyen de contrôle des objets à déposer dans un contenant disposé sur la tablette.

Dans une réalisation préférée, chaque convoyeur est un convoyeur à plusieurs bandes parallèles étroites. Chaque moyen pour transférer des contenants entre deux convoyeurs comprend des rouleaux disposés respectivement entre les bandes desdits deux convoyeurs, des moyens pour tourner les rouleaux dans le sens du transfert d'un contenant depuis l'un desdits deux convoyeurs vers l'autre, et des moyens pour monter les rouleaux au-dessus des bandes desdits deux convoyeurs et pour descendre les rouleaux au-dessous des bandes desdits deux convoyeurs.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue de dessus schématique d'une installation de convoyage selon l'invention avec plusieurs gares ;
- la figure 2 est une vue en perspective d'un dispositif de transfert de contenant entre deux convoyeurs disposés l'un à côté de l'autre dans l'installation selon l'invention ;
- la figure 3 est une vue analogue à la figure 2 montrant le transfert d'un contenant au moyen du dispositif de transfert montré à la figure 2 ;
- la figure 4 et une vue en coupe transversale du dispositif de transfert de la figure 3 ;
- la figure 5 est une vue de dessus schématique d'un poste de chargement selon une première réalisation de l'invention ;
- la figure 6 est une vue de dessus schématique de groupes de postes de chargement selon une variante plus économique ;
- la figure 7 est une vue de dessus analogue à la figure 6 d'une variante de réalisation encore plus économique ;
- la figure 8 est une vue de dessus schématique d'une variante d'un poste de chargement selon l'invention ;
- la figure 9 est une vue de côté longitudinale du poste de chargement montré à la figure 8 ; et
- la figure 10 est vue de dessus de postes de chargement disposés perpendiculairement à des convoyeurs d'aller et de retour dans une gare selon une seconde réalisation de l'invention.

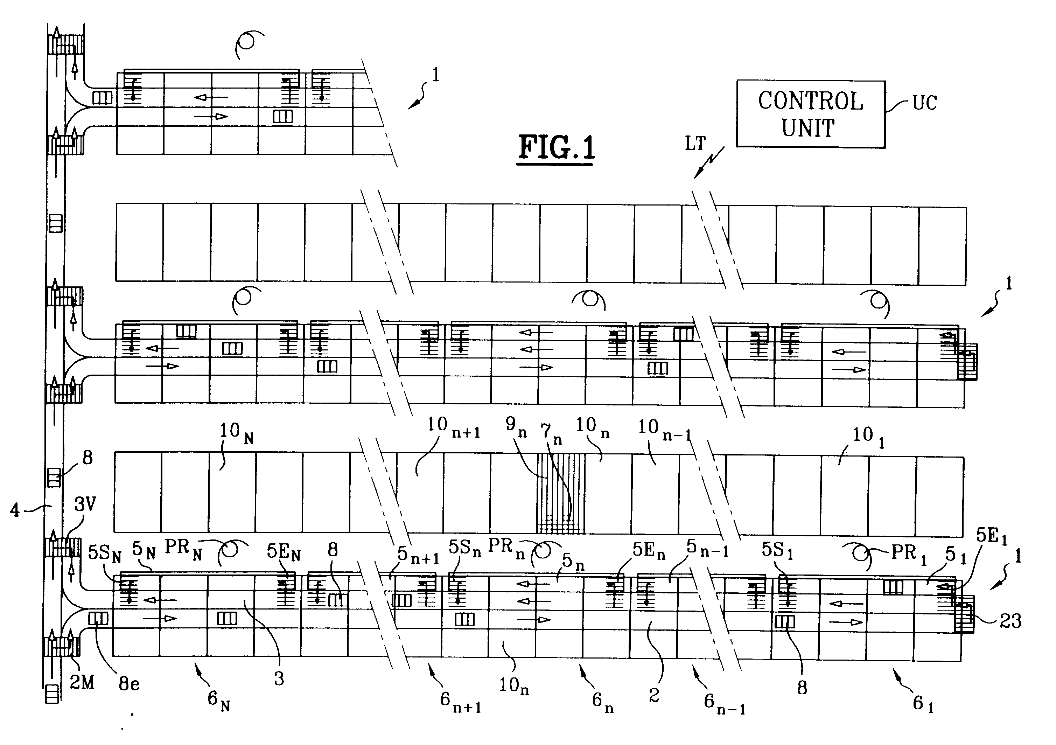

En référence à la figure 1, une installation de convoyage pour préparer des ensembles d'objets comprend plusieurs gares 1 qui contiennent chacune un convoyeur d'aller 2 et un convoyeur de retour 3. Les convoyeurs 2 et 3 s'étendent l'un à côté de l'autre perpendiculairement à un convoyeur principal 4 et ont des directions de convoyage opposées. Dans une gare 1, plusieurs convoyeurs de chargement 5₁ à 5_{N}, où N est un entier compris entre 2 et 10 par exemple, s'étendent successivement le long du côté longitudinal de l'un des convoyeurs d'aller et de retour, qui est le convoyeur de retour 3 selon la réalisation illustrée à la figure 1, depuis l'extrémité amont vers l'extrémité aval du convoyeur de retour 3. Un convoyeur de chargement 5ₙ, où n est un entier compris entre 1 et N, délimite un poste de chargement 6ₙ où des objets déterminés 7ₙ sont sélectionnés et chargés dans des contenants 8, tels que des caisses en carton.

Initialement, des contenants vides sont stockés dans un poste de lancement situé à l'extrémité amont du convoyeur principal 4. Au poste de lancement est réalisée l'association entre un contenant et des instructions de remplissage qui sont par exemple détectées par lecture de code-à-barres identifiant chaque contenant et les postes de chargement vers lesquels il doit être dirigé. Ces instructions impliquent l'arrêt du contenant dans un nombre prédéterminé de postes de chargement. Selon une réalisation préférée à laquelle on se réfèrera ci-après, les contenants sont lancés pas à pas sur le convoyeur principal 4 les uns après les autres, ce qui évite toute accumulation de contenants. Tous les convoyeurs ont une vitesse de convoyage constante, si bien que la position de chaque contenant dans l'installation est connue à chaque instant au moyen de cellules photoélectriques de détection de présence de contenant jalonnant les convoyeurs et situées en particulier au niveau de dispositifs pour transférer les contenants d'un convoyeur vers un autre convoyeur.

Lorsqu'un contenant 8e doit être chargé dans au moins l'un des postes de chargement d'une gare déterminée 1, il entre par l'extrémité amont du convoyeur d'aller 2 de la gare déterminée à travers un dispositif de transfert 2M qui transfère automatiquement le contenant 8e du convoyeur principal 4 vers le convoyeur d'aller 2. Le contenant 8e est vide d'objets si la gare prédéterminée 1 est la première gare située la plus en amont du convoyeur principal 4 ou si le contenant 8e n'a pas encore traversé au moins une gare précédant la gare déterminée ; ou le contenant 8e est partiellement rempli d'objets qui ont été posés lorsque le contenant 8e était dans une ou plusieurs gares précédant la gare déterminée. Chaque contenant 8 à l'extrémité amont du convoyeur d'aller 2 peut atteindre l'extrémité aval du convoyeur d'aller, bien que le passage par cette extrémité aval ne soit pas une obligation comme on le verra dans la suite. L'extrémité aval du convoyeur d'aller 2 et l'extrémité amont du convoyeur de retour 3 dans la gare 1 sont reliées par un dispositif de transfert 23 pour transférer des contenants du convoyeur d'aller vers le convoyeur de retour. En variante, le dispositif de transfert 23 peut être remplacé par un moyen pour tourner à 180° les contenants entre l'extrémité aval du convoyeur d'aller 2 et l'extrémité amont du convoyeur de retour 3.

En fonction des objets à charger dans un contenant 8 sur le convoyeur de retour 3, le contenant 8 peut être dévié du convoyeur de retour 3 pour demeurer provisoirement dans un ou plusieurs postes de chargement 6₁ à 6_{N}. L'entrée d'un contenant 8 dans un poste déterminé 6ₙ s'effectue par un dispositif de transfert d'entrée 5Eₙ pour transférer le contenant 8 du convoyeur de retour 3 vers l'extrémité amont du convoyeur de chargement 5ₙ. Un moyen de prélèvement d'objet PRₙ, tel qu'un préparateur, prélève des objets 7ₙ dans des cases 9ₙ d'un casier 10ₙ associé au poste 6ₙ. Selon la réalisation illustrée à la figure 1, chaque casier 10ₙ est composé de deux rayonnages de cases en regard. L'un des rayonnages est disposé au-dessus des convoyeurs 2 et 3, et l'autre rayonnage est disposé sur le sol et séparé du convoyeur de retour 3 par une travée de gare le long de laquelle circulent les préparateurs PR₁ à PR_{N} dans les postes 6₁ à 6_{N}. Les rayonnages peuvent être des transcasiers dans lesquels les cases sont inclinées vers la travée pour un approvisionnement dynamique des objets. Après prélèvement des objets par le préparateur PRₙ dans les cases 7ₙ et chargement du contenant 8 avec les objets prélevés, le préparateur PRₙ pousse le contenant chargé vers le convoyeur de retour 3. Toutefois, comme montré à la figure 1, il est préférable qu'un dispositif de transfert de sortie 5Sₙ localisé à l'extrémité aval du convoyeur de chargement 5ₙ transfère le contenant chargé 8 depuis le convoyeur de chargement 5ₙ vers le convoyeur de retour 3. Une dizaine de contenants environ peuvent attendre dans le poste 6ₙ sur le convoyeur de chargement 5ₙ entre les dispositifs de transfert 5Eₙ et 5Sₙ.

Après passage et/ou chargement dans un ou plusieurs postes 6ₙ₊₁ à 6_{N}, le contenant 8 sort de la gare 1 à travers un dispositif de transfert 3V situé à l'extrémité aval du convoyeur de retour 3 pour le transférer du convoyeur de retour 3 vers le convoyeur principal 4. Le contenant 8 rempli partiellement ou totalement transite ensuite le cas échéant dans une ou plusieurs gares suivantes si sa charge d'objets est à compléter, et finalement est acheminé vers un poste de fermeture de contenant situé à l'extrémité aval du convoyeur principal 4, puis vers un poste d'expédition de contenant.

Un ensemble d'objets peut constituer une commande d'objets réalisée dans un entrepôt de stockage et d'expédition. Les objets sont par exemple des livres, des boîtes, des flacons, des sachets ou autres conditionnements par exemple pour produits alimentaires ou pharmaceutiques ou pour cosmétiques. Selon une autre application, un ensemble d'objets peut être destiné à l'alimentation d'un atelier de traitement ou de montage et concerné par exemple de l'outillage, ou des pièces détachées et composants électroniques d'appareils.

Un objet 7ₙ est défini par exemple par trois données principales qui sont l'emplacement (9ₙ, 10ₙ) de l'objet où il est stocké dans la gare, la masse de l'objet et un identificateur identifiant l'objet auquel peut être adjoint la désignation de l'objet. Les objets lourds sont introduits de préférence dans les gares en amont du convoyeur principal 4 afin de les poser en premier au fond des contenants.

Ces données d'objet sont préenregistrées et gérées dans une unité de commande centrale UC incluse dans un système informatique superviseur et reliée bidirectionnellement aux postes de chargement 6₁ à 6_{N} dans toutes les gares. Les communications entre les postes et l'unité de commande sont établies et libérées suivant un protocole de transmission de messages connus. La liaison de transmission de messages et données entre l'unité et les postes est adaptée aux contraintes des implantations des postes dans les gares. Par exemple, la liaison de transmission est une liaison sans fil par infrarouge, ou une liaison par radiofréquence, le cas échéant à travers des balises convenablement implantées, par exemple aux extrémités des travées de gare devant le convoyeur principal 4.

Des codes d'un objet sont inscrits sur l'objet ou sur une étiquette collée sur celui-ci. Par exemple, les codes d'objet sont des codes-à-barres. Des lecteurs de code dans les postes de chargement sont adaptés aux codes.

Par exemple, un premier code d'objet désigne sous forme codée l'objet, et est lu lorsqu'il doit être prélevé dans un poste de chargement. Un second code d'objet traduit sous forme codée un numéro de série et/ou un numéro de lot et/ou une classe d'objet à laquelle appartient l'objet et est à transmettre par le poste de chargement où est prélevé l'objet vers l'unité de commande centrale UC pour une gestion ultérieure des objets.

Certains objets sont démunis de codes lisibles par lecteur électronique, et ne peuvent être contrôlés, si cela est souhaité, que par rapport à leur masse.

Un contenant 8 peut être un bac, une caisse ou une barquette en carton, ou tout autre réceptacle ouvert. Les contenants 8 peuvent avoir des dimensions différentes entre eux. Lorsque les contenants sont à expédier, ceux-ci peuvent être munis de feuilles thermorétractables déposées dans un poste de formage de contenant situé en amont ou en aval du convoyeur principal 4, et thermorétractées par dessus les objets dans un poste de thermorétraction de feuilles et de fermeture de contenants situé en aval du convoyeur principal 4. Les feuilles thermorétractées maintiennent sous forme compacte les objets contre le fond des contenants. Dans le poste de fermeture en aval du convoyeur principal 4, chaque contenant est fermé, par exemple par la pose d'une coiffe, après une éventuelle réduction de sa hauteur en fonction de la hauteur de la charge dans le contenant.

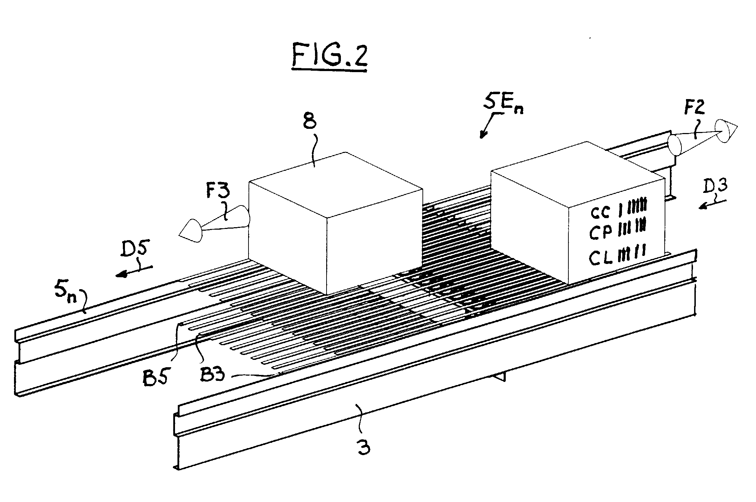

Sur au moins l'une des parois verticales du contenant 8 sont apposés directement ou sur une étiquette au moins un code de contenant CC, un code de poste CP et un code de liste d'objets CL, comme montré à la figure 2. Ces trois codes sont par exemple du même type que ceux portés par un objet, soit ici des codes-à-barres. Le code CC identifie le contenant, c'est-à-dire constitue une adresse de contenant permettant à l'unité de commande UC de surveiller et modifier le cheminement du contenant en déduisant la position du contenant sur les convoyeurs notamment en fonction de l'instant de lancement du contenant, des vitesses des convoyeurs et de données fournies par les cellules de détection de présence, en combinaison si nécessaire avec des lecteurs de code-à-barres implantés à l'entrée des convoyeurs de chargement 5ₙ, en amont des dispositifs de transfert d'entrée 5Eₙ de manière à sécuriser les aiguillages de contenant le long du convoyeur de retour 3. Le code CC indique également les dimensions, c'est-à-dire la capacité du contenant afin de sélectionner les contenants en fonction des lots d'objets à charger dans ceux-ci. Le code CP identifie le ou les postes de chargement destinataires où des objets sont à prélever pour charger le contenant 8. Le code CL identifie la liste des objets à charger dans le contenant, le détail de cette liste étant transmis partiellement ou totalement par l'unité de commande UC à un poste de chargement destinataire, selon qu'une partie ou la totalité de la liste des objets sont à charger dans le contenant au poste en question.

Les convoyeurs 2, 3, 4 et 5₁ à 5_{N} sont, à titre d'exemple, des convoyeurs multibande, bien qu'ils peuvent être du type à rouleaux, galets, palettes ou plateaux. Tous les dispositifs de transfert inclus dans les réalisations de l'installation de préparation selon l'invention pour transférer chacun des contenants d'un convoyeur vers un autre convoyeur sont adaptés au type de convoyeur : par exemple, des dispositifs de transfert avec des rouleaux entraînés qui montent et descendent, analogues à celui détaillé ci-après, sont des dispositifs de transfert associés aux convoyeurs multibande.

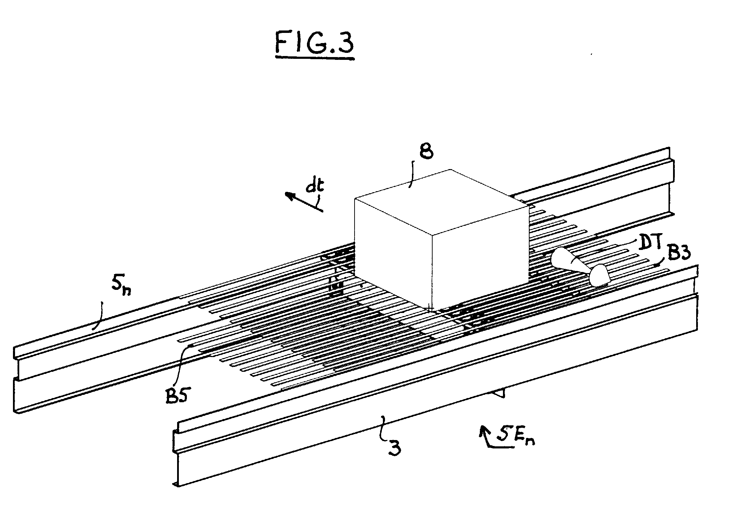

Comme montré aux figures 2 et 3, un convoyeur, tel que le convoyeur 3 ou 5ₙ au niveau d'un dispositif de transfert, tel que le dispositif 5Eₙ à l'entrée du poste de chargement 6ₙ, comprend 8 bandes sans fin étroites B3, B5 s'étendant parallèlement à la direction de convoyage D3, D5 des contenants. Dans cette réalisation, les bandes du convoyeur de retour et les bandes de chaque convoyeur de chargement peuvent n'être entraînées que par un seul système d'entraînement. Selon une autre variante, chaque convoyeur multibande comprend 16 bandes étroites lorsque les contenants sont relativement larges.

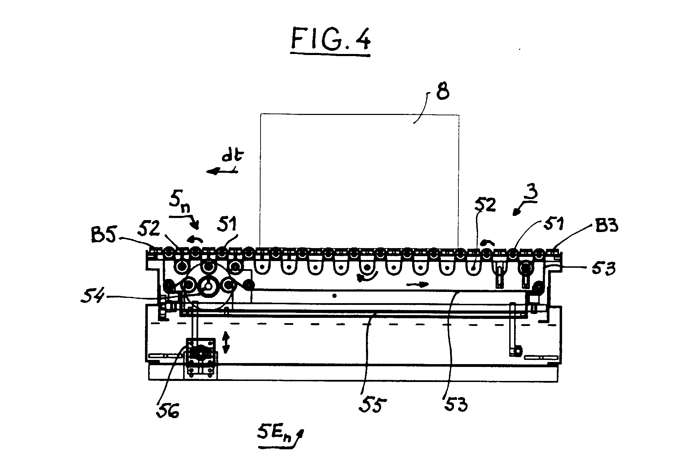

Comme montré particulièrement à la figure 4, les bandes B3 et B5 des convoyeurs 3 et 5 sont coplanaires au voisinage du dispositif de transfert 5Eₙ. Entre les bandes sont disposés des petits rouleaux de transfert en caoutchouc 51, ici au nombre de (2x8)-1 = 15 et sous les bandes sont disposés des galets de renvoi 52. Les rouleaux ont une longueur sensiblement égale à la plus grande longueur des contenants 8. Une bande d'entraînement sans fin 53 serpente alternativement entre les rouleaux de transfert 51 et les rouleaux de renvoi 52 et est animée par une roue motrice 54 afin que la périphérie supérieure des rouleaux de transfert 51 tourne selon la direction de transfert dt souhaitée, du convoyeur 3 vers le convoyeur 5ₙ. Les éléments 51 à 54 avec le moteur électrique associé à la roue 54 sont montés sur un cadre 55 d'un parallélogramme déformable par un vérin 56, installé dans le bâti du dispositif de transfert. Le vérin 56 est commandé par l'unité de commande UC de manière à monter le cadre 55 et ainsi les rouleaux de transfert 51 depuis une position basse à laquelle les rouleaux 51 sont au-dessous des bandes B3 et B5 de 10 mm environ, jusqu'à une position haute à laquelle les rouleaux sont au-dessus des bandes B3 et B5 de 10 mm environ, puis à descendre le cadre 53 avec les rouleaux 51.

Lorsqu'un contenant 8 est signalé à l'unité de commande centrale UC par une cellule de détection de présence de contenant située à l'entrée du dispositif de transfert 5Eₙ et latéralement au convoyeur de retour 3, l'unité UC commande la levée du cadre 55 par le vérin 56 dès que le contenant 8 est positionné sur les bandes B3 au-dessus des rouleaux de transfert 51. Lorsque les rouleaux 51 passent à une position intermédiaire à laquelle ils affleurent les bandes B3 et B5, comme montré à la figure 4, le contenant 8 commence à être transféré perpendiculairement aux convoyeurs 3 et 5ₙ, de l'un vers l'autre, suivant la flèche dt, grâce à la rotation des rouleaux 51. Puis une autre une cellule de détection de présence de contenant localisée en sortie du dispositif de transfert 5Eₙ et latéralement au convoyeur 5ₙ signale un sensible alignement du contenant 8 avec le convoyeur 5ₙ pour que l'unité de commande UC ordonne la descente du cadre 55 au vérin 56. Lorsque les rouleaux de transfert 51 descendent depuis la position haute jusqu'à la position basse, ils déposent à leur position intermédiaire le contenant 8 en fin de transfert sur les bandes B5 du convoyeur 5ₙ qui l'entraîne dans le poste de chargement 6ₙ.

Afin que deux contenants ne soient pas positionnés sur le dispositif de transfert, ou l'un soit en cours de transfert pendant que l'autre traverse le dispositif de transfert sur l'un des convoyeurs, le pas minimum entre deux contenants successifs vérifié par les cellules de détection de présence de contenant est déterminé pour éviter toute accumulation de contenants sur les convoyeurs.

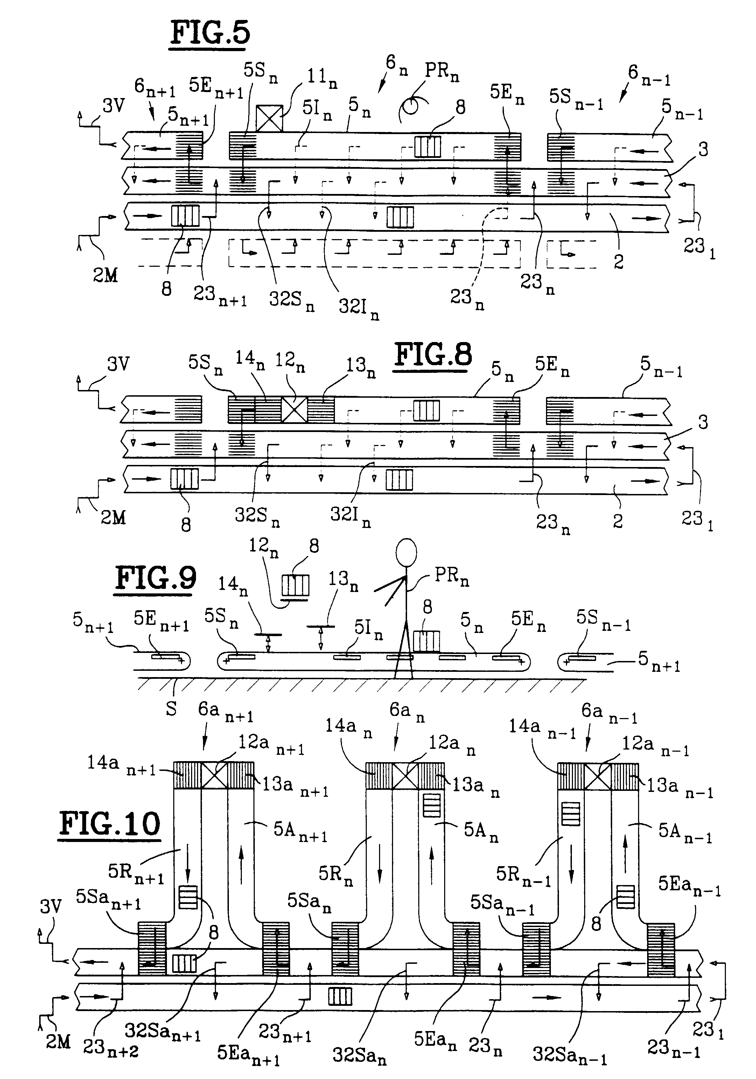

Le dispositif de transfert décrit ci-dessus est utilisé chaque fois que des contenants 8 sont à transférer d'un convoyeur vers un autre convoyeur ayant des mêmes directions de convoyage D3 et D5, comme dans les dispositifs de transfert 2M, 5Eₙ, 5Sₙ et 3V et des dispositifs de transfert 5Iₙ (figure 5) cités ultérieurement. Toutefois, ce dispositif de transfert est indépendant des directions de convoyage des deux convoyeurs. Ainsi, le dispositif de transfert montré aux figures 2 à 4 est également utilisé pour transférer des contenants 8 d'un premier convoyeur, tel que le convoyeur d'aller 2, vers un second convoyeur, tel que le convoyeur de retour 3, ayant une direction de convoyage opposée à celle du premier convoyeur, et peut être le dispositif de transfert 23, ou tout autre dispositif de transfert 23ₙ, 32Sₙ, 32Iₙ cité ultérieurement, pour transférer des contenants entre les convoyeurs 2 et 3 (figure 5). Un tel transfert entre convoyeurs de directions opposées est indiqué par des flèches tridimensionnelles F3, DT et F2 dans les figures 2 et 3.

Le poste de chargement 6ₙ est montré en détail à la figure 5 au niveau des convoyeurs 2, 3 et 5ₙ afin de ne pas surcharger la figure 1. Outre les deux dispositifs de transfert 5Eₙ et 5Sₙ, le poste 6ₙ comprend selon l'invention un dispositif de transfert 23ₙ qui est localisé juste en amont du convoyeur de chargement 5ₙ, entre le dispositif de transfert 5Sₙ₋₁ en sortie du poste de chargement précédent 6ₙ₋₁ et le dispositif de transfert 5Eₙ à l'entrée du convoyeur de chargement 5ₙ. En variante, le dispositif de transfert 23ₙ est localisé en alignement transversal avec le dispositif de transfert 5Eₙ situé à l'entrée du convoyeur de chargement 5, comme montré en traits interrompus courts à la figure 5. Le dispositif de transfert 23ₙ transfère des contenants 8 pouvant venir directement de l'entrée de la gare 1, depuis le convoyeur d'aller 2 vers le convoyeur de retour 3.

Le dispositif de transfert 23ₙ réduit le temps de transit d'un contenant 8 à charger dans le poste 6ₙ, ou le cas échéant dans l'un des postes 6ₙ à 6_{N}, en raccourcissant le cheminement du contenant précité 8 dans la gare, de l'aller et retour entre le poste 6ₙ et le dispositif de transfert d'extrémité 23. Ce dernier dispositif 23 est désigné dans la figure 5 par 23₁, puisqu'il est pour le poste 6₁ équivalent au dispositif 23ₙ du poste 6ₙ.

Le dispositif de transfert 23ₙ est utilisé pour transférer un contenant 8 à charger au poste 6ₙ par exemple
lorsque le poste 6ₙ contient peu de contenants en attente de chargement sur le convoyeur de chargement 5ₙ, ou
lorsque le contenant 8 doit être chargé à l'un des postes suivants 6ₙ₊₁ à 6_{N}, par exemple le poste 6ₙ₊₂ qui, après la durée de cheminement du contenant 8 du dispositif de transfert 23ₙ au dispositif de transfert 5Eₙ₊₂ à l'entrée du poste 6ₙ₊₂, sera alors disponible pour charger le contenant 8.

Selon une réalisation plus perfectionnée, le poste de chargement 6ₙ comprend au moins un dispositif de transfert 32Sₙ qui transfère un contenant 8 du convoyeur de retour 3 vers le convoyeur d'aller 2 de manière à réinjecter un contenant 8 dans la boucle de convoyage de la gare, sur le convoyeur d'aller 2 depuis le poste 6ₙ et sur le convoyeur de retour 3 jusqu'au poste 6ₙ. Le dispositif de transfert 32Sₙ est localisé entre les dispositifs de transfert 5Eₙ et 5Sₙ aux extrémités du convoyeur de chargement 5ₙ.

De préférence comme montré à la figure 5, le dispositif de transfert 32Sₙ est localisé à proximité du dispositif de transfert 5Sₙ en sortie du poste de chargement 6ₙ. Par exemple, un contenant 8 transféré par le dispositif 32Sₙ est réinjecté sur le convoyeur de retour 3 en direction du dispositif de transfert 5Eₙ à l'entrée du poste 6ₙ, à travers le dispositif de transfert 23ₙ, ou tout autre dispositif de transfert 23ₙ₋₁ à 23₁, après un laps de temps suffisant pour qu'un contenant précédant ait été chargé dans le poste 6ₙ et libère une place sur le convoyeur 5ₙ pour que le contenant réinjecté 8 ayant effectué au moins un aller-retour entre les dispositifs 23ₙ et 32Sₙ puisse être transféré sur le convoyeur de chargement 5ₙ.

Si le poste 6ₙ contient beaucoup de contenants en attente de chargements relativement longs sur le convoyeur 5ₙ, lorsqu'un contenant donné 8 arrive devant le dispositif de transfert d'entrée 5Eₙ, le contenant donné 8 peut, sous le contrôle de l'unité de commande UC, suivre une boucle de cheminement plus ou moins longue sur les convoyeurs 3 et 2 grâce aux dispositifs de transfert 32Sₙ à 32S_{N} et 23ₙ à 23₁, et plus généralement plusieurs boucles de cheminement a priori de différentes longueurs grâce aux dispositifs de transfert 32S₁ à 32S_{N} et 23₁ à 23_{N}, tant que le poste 6ₙ ou les postes de chargement 6₁ à 6_{N} dans lesquels le contenant donné 8 doit recevoir des objets sont saturés.

La réinjection de contenants dans la boucle des convoyeurs 2 et 3 à travers les dispositifs de transfert 32S₁ à 32S_{N} assure que tout contenant qui doit recevoir des objets dans l'un des postes de la gare les recevra avant de quitter cette gare. Mais surtout la réinjection de contenants facilite le dégagement du cheminement d'autres contenants destinés à des postes de chargement disponibles, c'est-à-dire ces autres contenants ne sont pas arrêtés par des contenants qui seraient en attente statique sur le convoyeur de retour 3 devant un convoyeur de chargement complètement saturé.

A titre d'exemple, 50 contenants destinés au poste 6ₙ sont suivis par n-1 contenants respectivement destinés aux postes 6₁ à 6ₙ₋₁ sur le convoyeur d'aller 2. Dix contenants sont d'abord aiguillés vers le poste 6ₙ à travers le dispositif de transfert 23ₙ. Les 50-10 contenants encore destinés au poste 6ₙ ne sont pas arrêtés en file d'attente devant celui-ci sur le convoyeur 3 et éventuellement le convoyeur 2, mais selon l'invention effectuent des boucles respectivement de plus en plus longues à travers les dispositifs 32S₁ à 32S_{N} et 23₁ à 23_{N}. Ceci préserve un libre acheminement desdits n-1 contenants suivants pour qu'ils puissent accéder quasiment directement aux postes 6₁ à 6ₙ₋₁ par les dispositifs de transfert 23₁ à 23ₙ₋₁, ou éventuellement indirectement par le dispositif de transfert 23₁, sans une quelconque attente sur le convoyeur de retour 3.

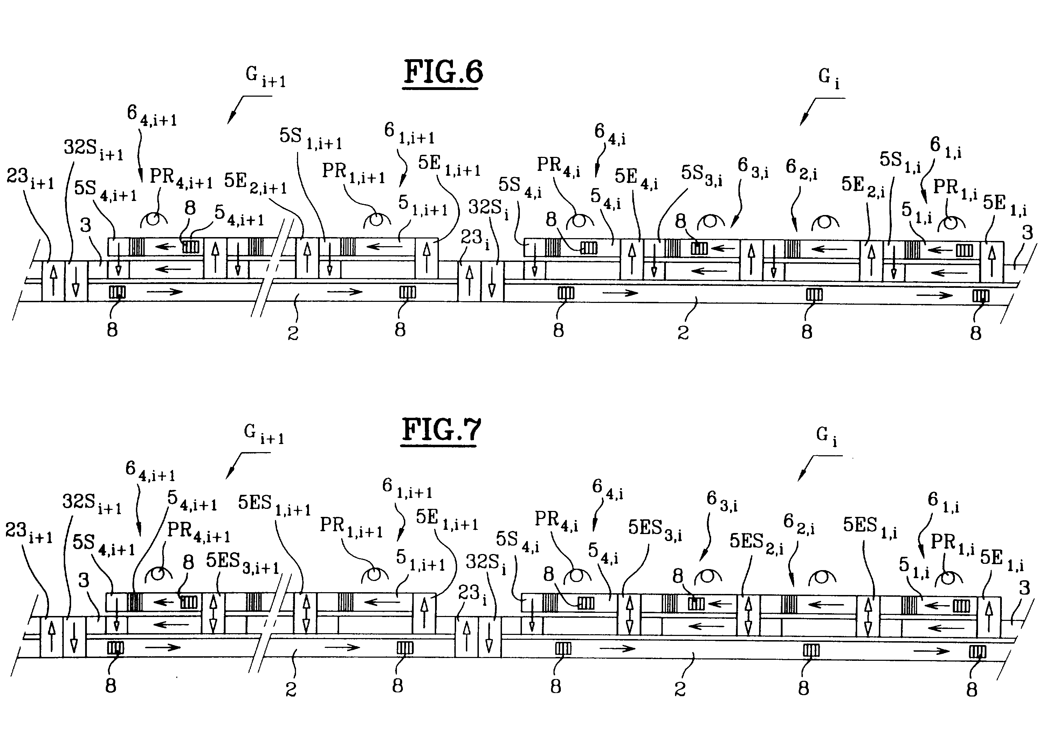

Selon une réalisation plus économique, les dispositifs de transfert tels que 23ₙ et 32Sₙ disposés entre les convoyeurs 2 et 3 sont intercalés périodiquement par couples tous les M postes de chargement, le nombre N de postes de chargement étant généralement un multiple entier de M. Comme montré à la figure 6, entre deux groupes consécutifs Gᵢ et Gᵢ₊₁ chacun de M=4 postes de chargement 6_{1,i} à 6_{4,i}, 6_{l,i+l} à 6_{4,i+1} sont prévus des dispositifs de transfert 32Sᵢ et 23Sᵢ indépendants l'un de l'autre. Le dispositif de transfert 32Sᵢ est situé en aval du dispositif de transfert de sortie 5S_{4,i} du dernier poste de chargement 6_{4,i} du groupe Gᵢ, suivant la direction de transport du convoyeur de retour 3, pour réinjecter des contenants 8 depuis le convoyeur de retour 3 vers le convoyeur d'aller 2. Le dispositif de transfert 23₁ est situé entre le dispositif de transfert 32Sᵢ et le dispositif de transfert d'entrée 5E_{1,i+1} du premier poste de chargement 6_{1,i+1} du groupe suivant Gᵢ₊₁ pour transférer des contenants 8 depuis le convoyeur d'aller 2 vers le convoyeur de retour 3.

Selon la figure 6, dans un groupe Gᵢ, les M = 4 postes de chargement sont accolés, c'est-à-dire le dispositif de transfert de sortie 5S_{m,i} du poste de chargement 6_{m,i} est disposé à proximité du ou accolé au dispositif de transfert d'entrée 5E_{m+l,i} du poste de chargement suivant 6_{m+1,i} et est indépendant de celui-ci, m étant un entier compris entre 1 et M-1 = 3.

Selon une variante encore plus économique montrée à la figure 7, les postes de transfert de sortie 5S_{m,i} et les postes de transfert d'entrée 5E_{m+l,i} respectivement disposés à proximité ou accolés dans la figure 6 sont réunis en des postes de transfert d'entrée/sortie 5ES_{m,i}. Le dispositif de transfert 5ES_{m,i} fonctionne tantôt pour transférer des contenants 8 chargés depuis l'extrémité aval du convoyeur de chargement 5_{m,i} vers le convoyeur de retour 3, tantôt pour transférer des contenants 8 à charger depuis le convoyeur de retour 3 vers l'extrémité amont du convoyeur de chargement 5_{m+l,i}. Le premier transfert précité est prioritaire sur le deuxième transfert précité, ou inversement.

En se référant de nouveau à la figure 5 selon d'autres variantes, d'autres dispositifs de transfert indépendants les uns des autres sont encore prévus. Par exemple, des dispositifs de transfert intermédiaires 32Iₙ pour transférer des contenants du convoyeur de retour 3 vers le convoyeur d'aller 2 sont disposés entre les dispositifs de transfert 5Eₙ et 5Sₙ dans le poste de chargement 6ₙ. Ces dispositifs de transfert intermédiaires 32Iₙ assurent un cheminement optimal à tout contenant qui doit être réinjecté sur le convoyeur d'aller 2 afin que le contenant entre dans un poste de chargement précédemment indisponible, précisément dès que ce poste de chargement devient disponible pour l'accepter.

Dans un but analogue selon une autre variante, le poste de chargement 6ₙ contient un ou plusieurs dispositifs de transfert intermédiaires 5Iₙ localisés entre les dispositifs de transfert 5Eₙ et 5Sₙ pour transférer des contenants depuis le convoyeur de chargement 5ₙ vers le convoyeur de retour 3. Les dispositifs de transfert intermédiaires 5Iₙ sont utilisés par exemple lorsqu'un contenant donné a été rapidement chargé avec un ou deux objets avant que les contenants chargés suivants sur le convoyeur de chargement 5ₙ aient eu le temps d'être transférés par le dispositif de transfert 5Sₙ en sortie du poste 6ₙ, ou bien lorsqu'un contenant est prioritaire par rapport au moins au contenant donné se trouvant sur le convoyeur 5ₙ et doit être chargé rapidement dans le poste 6ₙ, le contenant donné étant alors réinjecté ultérieurement sur le convoyeur d'aller 2.

Chaque dispositif de transfert intermédiaire 5Iₙ peut être commandé soit automatiquement par l'unité de commande centrale UC, soit manuellement par bouton-poussoir par le préparateur PRₙ dans le poste de chargement 6ₙ.

L'invention n'est pas limitée aux réalisations montrées aux figures 1 et 5 à 7 selon lesquelles des convoyeurs de chargement sont disposés le long du convoyeur de retour 3.

Selon une autre réalisation, des convoyeurs de chargement sont seulement disposés le long du convoyeur d'aller 2, comme montré en traits interrompus courts dans la figure 5.

Selon une autre réalisation, des convoyeurs de chargement sont disposés le long du convoyeur d'aller 2 et le long du convoyeur de retour 3.

Comme déjà dit, le lot d'objets à charger dans un contenant au niveau d'un poste peut être contrôlé par pesage. Par exemple, une tablette de contrôle 11ₙ assiste le préparateur PRₙ pour contrôler les objets prélevés dans le casier 10ₙ à poser dans les contenants en attente sur le convoyeur 5ₙ. La tablette de contrôle 11ₙ est fixée latéralement au convoyeur de chargement 5ₙ, juste avant le dispositif de transfert 5Sₙ, afin que le préparateur PRₙ retire le premier contenant dans la file d'attente sur le convoyeur 5ₙ pour le poser sur un plateau-peseur d'un dispositif de pesage inclus dans la tablette. Après chargement et pesage, le contenant chargé est posé sur une zone de réinjection qui peut être confondue avec la partie du dispositif de transfert de sortie 5Sₙ commune à celui-ci et au convoyeur de chargement 5ₙ. Selon une autre variante, la tablette 11ₙ est mobile soit manuellement soit par moteur le long du convoyeur de chargement 5ₙ, afin de prendre un contenant n'importe où le long du convoyeur 5ₙ.

La tablette de contrôle 5ₙ est par exemple celle décrite dans le brevet européen EP-B-0 494 014. Elle comprend une unité logique à microprocesseur connectée notamment à
un écran pour afficher la liste des objets à prélever dans la case 10ₙ pour un contenant et leur emplacement,
un clavier pour saisir des anomalies ou des objets manquants et signaler éventuellement la fin d'un chargement et d'une pesée de contenant,
un émetteur-récepteur relié à l'unité de commande UC par liaison LT,
un dispositif de pesage pour peser un par un ou par lot les objets chargés dans un contenant de manière à éviter toute erreur de sélection d'objet dans le casier,
un premier lecteur pour lire un code de contenant CC et un code de liste d'objets CL sur un contenant posé sur le dispositif de pesage, et
un second lecteur pour lire les codes sur chaque objet à prélever dans le casier 10ₙ.

Selon une variante montrée aux figures 8 et 9, la tablette de contrôle 12ₙ est intégrée dans le cheminement des contenants 8 sur le convoyeur de chargement 5ₙ. Ainsi les préparateurs ne manipulent pas les contenants. La tablette 12ₙ est immobile dans un plan qui est surélevé par exemple de 20 à 30 cm par rapport au plan de convoyage des contenants sur le convoyeur de chargement 5ₙ. En pratique, tous les convoyeurs 2, 3 et 5₁ à 5ₙ dans la gare 1 sont disposés les uns à côté des autres sur le sol, et la tablette 12ₙ est disposée à une hauteur de 50 à 80 cm au-dessus du sol afin qu'elle soit facilement accessible aux mains du préparateur PRₙ. Dans cette variante, la partie du casier 10ₙ qui se trouve au-dessus des convoyeurs 2, 3 et 5ₙ a un volume de stockage d'objets beaucoup plus important.

En amont de la tablette de contrôle 12ₙ est prévu un dispositif de montée/descente en va-et-vient 13ₙ pour lever chaque contenant 8 en attente sur le convoyeur de chargement 5ₙ vers la tablette 12ₙ. De même en aval de la tablette de contrôle 12ₙ est prévu un autre dispositif de montée/descente en va-et-vient 14ₙ pour descendre chaque contenant 8 dont la charge a été vérifiée sur la tablette de contrôle 12ₙ vers l'extrémité amont 5Sₙ du convoyeur de chargement 5ₙ.

En variante, le contrôle de la charge du contenant par pesée du contenant pour chaque objet ou lot d'objets déposés dans celui-ci est supprimé.

Selon une seconde réalisation de l'invention, chaque convoyeur de chargement 5ₙ est remplacé par un convoyeur de chargement d'aller 5Aₙ et un convoyeur de chargement de retour 5Rₙ disposés sensiblement perpendiculaires au convoyeur de retour 3. A l'extrémité amont du convoyeur de chargement d'aller 5Aₙ est localisé un dispositif de transfert 5Eaₙ pour transférer des contenants 8 depuis le convoyeur de retour 3 vers le convoyeur de chargement d'aller 5Aₙ. Les contenants 8 entrant dans le poste 6aₙ sur le convoyeur de chargement d'aller 5Aₙ sont transférés depuis l'extrémité aval du convoyeur de chargement d'aller 5Aₙ vers l'extrémité amont du convoyeur de chargement de retour 5Rₙ par un dispositif de transfert 13aₙ-14aₙ analogue au dispositif de transfert 231 aux extrémités des convoyeurs 2 et 3.

Le chargement d'un contenant 8 dans le poste 6aₙ est de préférence effectué entre l'extrémité aval du convoyeur de chargement d'aller 5Aₙ et l'extrémité amont du convoyeur de chargement de retour 5Rₙ. Comme illustré à la figure 10, une tablette 12aₙ, analogue à la tablette 12ₙ est disposée entre un dispositif de montée/descente en va-et-vient 13aₙ localisé à l'extrémité amont du convoyeur de chargement d'aller 5Aₙ et un dispositif de montée/descente en va-et-vient 14aₙ localisé à l'extrémité aval du convoyeur de chargement de retour 5Rₙ. Les dispositifs de montée/descente 13aₙ et 14aₙ qui respectivement monte un contenant depuis le convoyeur de chargement d'aller 5Aₙ vers la tablette 12aₙ et descende le contenant depuis la tablette 12aₙ vers le convoyeur de chargement de retour 5Rₙ, font office également de dispositifs pour transférer un contenant du convoyeur de chargement d'aller vers le convoyeur de chargement de retour.

Après la descente d'un contenant par le dispositif de montée/descente 14aₙ, le contenant transporté sur le convoyeur de chargement de retour 5Rₙ est transféré sur le convoyeur de retour 2 par l'intermédiaire d'un dispositif de transfert 5Saₙ localisé à l'extrémité aval du convoyeur de chargement de retour.

Dans la réalisation montrée à la figure 10 sont également prévus des dispositifs de transfert 23ₙ pour raccourcir le cheminement de contenants provenant du convoyeur d'aller 2 et des dispositifs de transfert 32Saₙ pour réinjecter des contenants dans le convoyeur d'aller 2, ces dispositifs de transfert étant localisés comme ceux dans la réalisation montrée à la figure 5.

## Revendications

1. Installation de convoyage de contenants comprenant un convoyeur d'aller (2) et un convoyeur de retour (3) pour convoyer des contenants (8) suivant des directions de convoyage opposées, plusieurs convoyeurs de chargement (5₁ à 5_{N}) disposés le long de l'un (3) des convoyeurs d'aller et de retour, et plusieurs premiers moyens (5E₁ à 5E_{N}) pour transférer des contenants depuis ledit un (3) des convoyeurs d'aller et de retour vers des extrémités amont des convoyeurs de chargement (5₁ à 5_{N}) respectivement, caractérisée en ce qu'elle comprend plusieurs seconds moyens (23ₙ) pour transférer des contenants depuis le convoyeur d'aller (2) vers le convoyeur de retour (3).

2. Installation conforme à la revendication 1, dans laquelle au moins l'un (23ₙ) des seconds moyens pour transférer est localisé entre une extrémité aval (5Sₙ₋₁) et une extrémité amont (5Eₙ) de deux convoyeurs de chargement (5ₙ₋₁, 5ₙ) consécutifs le long dudit un (3) des convoyeurs d'aller et de retour, ou est localisé en alignement transversal avec l'un (5Eₙ) des premiers moyens pour transférer.

3. Installation conforme à la revendication 1 ou 2, comprenant plusieurs troisièmes moyens (32Sₙ) chacun localisés entre les extrémités (5Eₙ, 5Sₙ) d'un convoyeur de chargement respectifs (25ₙ) pour transférer des contenants depuis le convoyeur de retour (3) vers le convoyeur d'aller (2).

4. Installation conforme à la revendication 3, dans laquelle les troisièmes moyens pour transférer (32Sₙ) sont localisés à proximité des extrémités aval des convoyeurs de chargement (5ₙ) respectivement.

5. Installation conforme à la revendication 3 ou 4, comprenant plusieurs troisièmes moyens pour transférer (32Iₙ) localisés entre les extrémités (5Eₙ, 5Eₙ) dudit convoyeur de chargement respectif (5ₙ).

6. Installation conforme à la revendication 1 dans laquelle les seconds moyens pour transférer (23ᵢ) sont respectivement localisés périodiquement entre des groupes (Gᵢ) de convoyeurs de chargement consécutifs (5_{1,i} à 5_{4,i}), et comprenant des troisièmes moyens (32Sᵢ) respectivement localisés à proximité des seconds moyens pour transférer (23ᵢ) pour transférer des contenants depuis le convoyeur de retour (3) vers le convoyeur d'aller (2).

7. Installation conforme à la revendication 6, dans laquelle chaque second moyen pour transférer (23ᵢ) est localisé en amont du troisième moyen respectif pour transférer (32Sᵢ) localisé à proximité de celui-ci, suivant la direction de transport du convoyeur d'aller (2).

8. Installation conforme à l'une quelconque des revendications 1 à 7, comprenant des quatrièmes moyens (5Sₙ) pour transférer des contenants depuis les convoyeurs de chargement (5ₙ) vers ledit un (3) des convoyeurs d'aller et de retour respectivement.

9. Installation conforme à la revendication 8, dans lequel les quatrièmes moyens pour transférer (5Sₙ) sont localisés aux extrémités amont des convoyeurs de chargement (5ₙ) respectivement.

10. Installation conforme à la revendication 9, comprenant au moins un cinquième moyen pour transférer (5Iₙ) localisé entre des extrémités (5Eₙ, 5Sₙ) de l'un des convoyeurs de chargement (5ₙ) pour transférer des contenants depuis ledit un convoyeur de chargement vers ledit un (3) des convoyeurs d'aller et de retour.

11. Installation conforme à l'une quelconque des revendications 1 à 7 comprenant au moins un moyen (5ESi_{1,i} à 5ES_{3,i}) localisés à une extrémité aval de l'un de deux convoyeurs de chargement consécutifs (5_{1,i} - 5_{2,i} à 5_{3,i} - 5_{4,i}) et à une extrémité amont de l'autre des deux convoyeurs de chargement consécutifs tantôt pour transférer des contenants (8) depuis ledit un (3) des convoyeurs d'aller et de retour vers l'extrémité amont dudit autre des convoyeurs de chargement consécutifs (5_{2,i} à 5_{4,i}), tantôt pour transférer des contenants depuis l'extrémité aval dudit un de deux convoyeurs de chargement consécutifs (5_{1,i} à 5_{3,i}) vers ledit un (3) des convoyeurs d'aller et de retour.

12. Installation conforme à l'une quelconque des revendications 1 à 11, comprenant plusieurs convoyeurs de chargement s'étendant le long dudit autre (2) des convoyeurs d'aller et de retour et associés respectivement à plusieurs premiers moyens pour transférer, et de préférence, associés respectivement à des quatrièmes moyens pour transférer (5Sₙ) conformes à la revendication 8 ou 9 ou 11, ou à des quatrièmes moyens pour transférer (5Sₙ) et des cinquièmes moyens pour transférer conformes à la revendication 10.

13. Installation conforme à l'une quelconque des revendications 1 à 12, dans laquelle chaque convoyeur de chargement (5ₙ) est associé à une tablette (12ₙ) surélevée par rapport audit chaque convoyeur de chargement (5ₙ), un moyen (13ₙ) disposé en amont de la tablette pour monter un contenant depuis ledit chaque convoyeur de chargement vers la tablette, et un moyen (14ₙ) disposé en aval de la tablette pour descendre un contenant depuis la tablette vers ledit chaque convoyeur de chargement.

14. Installation conforme à la revendication 13, dans laquelle le moyen pour monter (13ₙ), la tablette (12ₙ) et le moyen pour descendre (14ₙ) sont localisés au voisinage de l'extrémité aval dudit chaque convoyeur de chargement (5ₙ).

15. Installation conforme à l'une quelconque des revendications 1 à 12, dans laquelle les convoyeurs de chargement sont remplacés chacun par un convoyeur de chargement d'aller (5Aₙ) et un convoyeur de chargement de retour (5Rₙ) disposés sensiblement perpendiculairement audit un (3) des convoyeurs d'aller et de retour, et un moyen (13Aₙ, 14Aₙ) pour transférer des contenants depuis une extrémité aval du convoyeur de chargement d'aller vers une extrémité amont du convoyeur de chargement de retour.

16. Installation conforme à la revendication 15, dans laquelle le convoyeur de chargement d'aller (5Aₙ) et le convoyeur de chargement de retour (5Rₙ) sont associés à une tablette (12aₙ) surélevée par rapport aux convoyeurs de chargement d'aller et de retour (5Aₙ, 5Rₙ), un moyen (13aₙ) disposé en amont de la tablette pour monter un contenant depuis l'extrémité aval du convoyeur de chargement d'aller vers la tablette, et un moyen (14aₙ) disposé en aval de la tablette pour descendre un contenant depuis la tablette vers l'extrémité amont du convoyeur de chargement de retour.

17. Installation conforme à l'une quelconque des revendications 1 à 16, dans laquelle chaque convoyeur est un convoyeur à plusieurs bandes parallèles étroites (B3, B5), et chaque moyen pour transférer des contenants (8) entre deux convoyeurs (3, 5ₙ) comprend des rouleaux (51) disposés respectivement entre les bandes desdits deux convoyeurs, des moyens (52, 53, 54) pour tourner les rouleaux dans le sens du transfert (dt ; DT) d'un contenant depuis l'un desdits deux convoyeurs vers l'autre, et des moyens (55, 56) pour monter les rouleaux au-dessus des bandes desdits deux convoyeurs et pour descendre les rouleaux au-dessous des bandes desdits deux convoyeurs.
